# EUROPÄISCHE PATENTSCHRIFT

(11) **EP 2 354 362 B1**
(45) Veröffentlichungstag und Bekanntmachung des Hinweises auf die Patenterteilung: **10.08.2016**
(21) Anmeldenummer: 11000180.7
(22) Anmeldetag: 12.01.2011
(51) Int. Cl.: E04D 13/16, E04D 13/12, F24J 2/52, H01L 31/042

(54) **Befestigungsvorrichtung für die Verankerung von Aufbauelementen auf einer Flachdachkonstruktion**
Mounting device for anchoring of construction elements on a flat roof
Dispositif de fixation pour l'ancrage d'éléments de construction sur un toit plat

(30) Priorität: 13.01.2010 DE 102010004647
(43) Veröffentlichungstag der Anmeldung: 10.08.2011
(73) Patentinhaber: Adriaans, Heinrich, 32791 Lage (DE)
(72) Erfinder: Adriaans, Heinrich, 32791 Lage (DE)
(74) Vertreter: Brandt, Detlef

(56) Entgegenhaltungen:
- EP-A2- 0 984 114
- WO-A1-96/11311
- DE-A1- 3 515 734
- DE-A1-102009 040 671
- DE-A1-102009 043 810
- FR-A1- 2 930 304
- US-A1- 2006 207 204

## Beschreibung

Die Erfindung betrifft eine Befestigungsvorrichtung für die Verankerung von Aufbauelementen wie PV-Anlagen oder Absturzsicherungen auf einer Flachdachkonstruktion sowie zur Übertragung von auf die Aufbauelemente wirkenden dachparallelen Kräften in die Flachdachkonstruktion, welche aus einem Tragunterbau und einer an der Oberseite des Tragunterbaus angeordneten, mit Dichtungsbahnen überdeckten Dämmschicht besteht.

Bei Flachdachkonstruktionen mit einer oberhalb eines Tragunterbaus angeordneten Dämmschicht, sog. Warmdächern, wie sie vorrangig bei Industriegebäuden verwendet werden, besteht oftmals die Notwendigkeit, auf der Außenseite des Flachdaches zusätzliche Dachaufbauten, wie z. B. Fahnenmasten, PV-Anlagen, Absturzsicherungen, Werbetafeln oder Beleuchtungskörper anzuordnen.

Für die Befestigung derartiger Aufbauelemente ist es bislang im Stand der Technik üblich, diese unter Zuhilfenahme von Befestigungszwischenelementen direkt am Tragunterbau der Flachdachkonstruktion zu befestigen. Hierzu ist es notwendig, die an der Oberseite der Flachdachkonstruktion angeordneten Dichtungsbahnen als auch die zwischen den Dichtungsbahnen und dem Tragunterbau befindliche Dämmschicht zu durchtrennen, damit ein Zugriff auf den Tragunterbau möglich ist. Nach der Befestigung des für den Anbau der Aufbauelemente notwendigen Befestigungs-zwischenelementes ist dann die Dämmschicht sowie die Dichtungsbahn wieder zu schließen, damit keine Feuchtigkeit in die Dämmschicht eindringen kann, was zwangsläufig zur Minderung ihrer Dämmwirkung beitragen würde.

Die geschilderte Vorgehensweise ist naturgemäß mit einer Reihe von sorgfältig vorzunehmenden Arbeitsschritten verbunden, was den Gesamtmontageaufwand und sowie mit damit verbundenen Kosten erhöht.

Darüber hinaus hat die geschilderte Befestigungstechnik den schwer wiegenden Nachteil, dass eine unisolierte Verbindung (Wärmebrücke) zwischen der außerhalb der Dämmschicht liegenden Umgebung und dem Tragunterbau der Flachdachkonstruktion vorhanden ist. Dies kann dazu führen, dass in den Bereichen des Befestigungszwischenelementes raumseitig unter dem Tragunterbau oder im Bereich der Dämmung Schwitzwasser entsteht, was naturgemäß zu einer Minderung der Dämmwirkung bzw. längerfristig zu einer Schädigung der Dämmschicht führt. Darüber hinaus kann das Schwitzwasser auf tiefergelegene Bereiche wie abgehängte Decken oder dergleichen herabtropfen und hier Schäden verursachen.

Eine Befestigungsvorrichtung gemäß des Oberbegriffs des Anspruchs 1 wird in der DE 3926255 A1 beschrieben.

Ausgehend von den oben geschilderten Nachteilen der aus dem Stand der Technik bekannten Befestigungskonstruktionen von Aufbauelementen an Flachdächern ergibt sich die Aufgabe der Erfindung dahingehend, eine neuartige Befestigungstechnik bereitzustellen, bei der zum einen der Montageaufwand für die Aufbauelemente signifikant reduziert wird und zum anderen die durch die Dämmschicht bereitgestellte Isolationswirkung gegen Wärme und Kälte nicht beeinträchtigt wird.

Darüber hinaus sollen alle auf die Aufbauelemente von außen, beispielsweise durch Wndbelastung, einwirkenden Kräfte wie Zug-, Druck- und insbesondere dachparallel wirkende Schubkräfte von der neuartigen Konstruktion gemäß der Erfindung aufgenommen und kompensiert werden.

Die gestellte Aufgabe wird erfindungsgemäß zusammen mit den gattungsbildenden Merkmalen für eine Befestigungsvorrichtung für die Verankerung von Aufbauelementen auf einer Flachdachkonstruktion durch die im kennzeichnenden Teil des Anspruches 1 offenbarte technische Lehre gelöst.

Erfindungswesentlich dabei ist, dass die Befestigungsvorrichtung einen flächenförmigen Grundkörper zur Auflage auf der Flachdachkonstruktion an der der Dämmschicht abgewandten Oberseite der Dichtungsbahnen aufweist, welcher mit einem Verankerungselement am Tragunterbau festgelegt ist, wobei das Verankerungselement an seinem oberen, dem Tragunterbau abgewandten Ende in dem Grundkörper (5) senkrecht verschieblich zur Flachdachoberfläche eingespannt ist und mit einem Anschlagkopf versehen ist, der in einer Ausnehmung an der Oberseite des Grundkörpers so aufgenommen ist, dass bei Druckbelastung des Grundkörpers dieser in Längsrichtung des Verankerungselementes an diesem entlang verschiebbar ist, so dass die Einspannlänge des Verankerungselementes (9) im Grundkörper (5) erhalten bleibt und wobei der Anschlagkopf innerhalb der Ausnehmung verbleibt.

Durch die beschriebene technische Lösung ist zum einen gewährleistet, dass durch die Verbindung (Einspannung) zwischen Grundkörper und Verankerungselement alle am Grundkörper angreifenden Kräfte direkt in den Tragunterbau eingeleitet werden können. Die Verankerungselemente sind dabei im Querschnitt her so gering bemessen, dass die durch die oberhalb des Tragunterbaus befindliche Dämmschicht gewährleistete Isolierung, die von den Verankerungselementen durchbrochen wird, in zu vernachlässigender Weise beeinträchtigt wird.

Die geschilderte Ausgestaltung hat darüber hinaus den Vorteil, dass bei Begehung des Grundkörpers zwecks der Montage oder Wartung vorhandener Aufbauelemente eine schwimmende Lagerung des Grundkörpers gegeben ist, wodurch eine über dem Grundkörper vorhandene zusätzliche Dichtungsbahn zur Abschirmung gegen Umwelteinflüsse nicht der Gefahr einer Beschädigung durch infolge von Druckbelastung herausstehende Befestigungen ausgesetzt ist.

Besondere Ausgestaltungen des Gegenstandes der Erfindung ergeben sich zusätzlich aus den auf den Anspruch 1 rückbezogenen Unteransprüchen.

Es hat sich insbesondere als vorteilhaft erwiesen, wenn das Verankerungselement mit seinem unteren freien Ende in einer Ausnehmung am Tragunterbau durch eine Schraubverbindung gehalten ist. Die Art der Befestigung erleichtert die Montage, da das Verankerungselement von der Oberseite des Grundkörpers durch die in diesem vorhandene Öffnung, die darunter befindliche Dichtungsbahn und die Dämmschicht direkt in den Tragunterbau eingeschraubt werden kann. Vorteilhaft hat sich der Einsatz von Bohrschrauben erwiesen. Bei den üblicherweise eingesetzten Tragunterbauten handelt es sich dabei um so genannte Trapezbleche, in der ein Einschrauben der Bohrschrauben durch geeignete Werkzeuge problemlos möglich ist.

Erfindungsgemäß ist das Verankerungselement mindestens im Bereich seines Durchdringens durch den Grundkörper und die Dämmschicht von einem Hülsenelement umgriffen. Dieses Hülsenelement bietet im Bezug auf die Übertragung von Schubkräften eine Verstärkung des Verankerungselementes, so dass Verankerungselement und Hülsenelement gemeinsam am Grundkörper angreifende Kräfte in den Tragunterbau einleiten können.

Zusätzlich vorteilhaft kann in diesem Zusammenhang sein, dass der Innendurchmesser des Hülsenelementes geringfügig größer bemessen ist als der Außendurchmesser des Verankerungselementes. Durch diese Abstimmung der Abmaße ist ein zu großes Spiel zwischen Verankerungselement und Hülsenelement vermeidbar.

Um bei dickeren Dämmschichten die Schubkraftübertragung zusätzlich zu steigern, ist darüber hinaus denkbar, ein weiteres, das erste Hülsenelement außen umgreifendes weiteres Hülsenelement anzuordnen. Dies kann auch dann sinnvoll sein, wenn auf einer Flachdachkonstruktion unterschiedliche Dämmdicken zum Einsatz kommen.

Zusätzlich zweckmäßig ist es, wenn der Grundkörper an seiner der Flachdachkonstruktion abgewandten Außenseite durch eine Dichtungsbahn überdeckt ist, die an den Seitenbereichen des Grundkörpers mit der die Dämmschicht abdeckenden Dichtungsbahn luft- und flüssigkeitsdicht verbunden ist. Auf diese Weise ist nach Aufbau des Grundkörpers auf der Flachdachkonstruktion das Eindringen von Feuchtigkeit in die Dämmschicht ausgeschlossen, so dass Beeinträchtigungen der Isolierwirkung durch Feuchtigkeit ausgeschlossen sind.

Nachfolgend werden die beiden oben beschriebenen Ausführungsbeispiele des Gegenstandes der Erfindung anhand der beigefügten Zeichnungen näher erläutert. Es zeigt dabei:
- Fig. 1: die Schnittdarstellung einer Befestigungsvorrichtung,
- Fig. 2: eine vergrößerte Darstellung des Details A aus Figur 1,
- Fig. 3: die Schnittdarstellung einer erfindungsgemäßen Ausgestaltung für die Übertragung größerer Schubkräfte als in der Ausgestaltung der Figur 1 und
- Fig. 4: die Schnittdarstellung einer Variation der Konstruktion aus Fig. 3

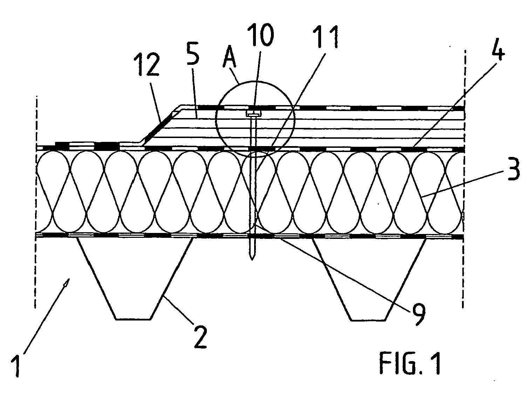

Die in der Figur 1 dargestellte Befestigungsvorrichtung ist auf einer insgesamt mit 1 bezeichneten Flachdachkonstruktion aufgesetzt. Die Flachdachkonstruktion 1 besteht im Wesentlichen aus einem Tragunterbau 2, der aus einem Metalltrapezblech besteht. Selbstverständlich sind in diesem Zusammenhang auch andere Tragunterbauvarianten denkbar.

An der Oberseite des Tragunterbaus 1 ist eine aus üblichem Dämmmaterial bestehende Dämmschicht 3 angeordnet. Die Dämmschicht 3 ist wiederum durch eine mit 4 bezeichnete Dichtungsbahn abgedeckt.

Um auf die Flachdachkonstruktion 1 Aufbauelemente, wie beispielsweise Antennen, Absturzsicherungen, Werbetafeln, PV-Anlagen und dgl. anzuordnen, die auch bei widrigen Wetter- und Windverhältnissen an ihrem Platz verbleiben müssen, ist auf der dem Tragunterbau abgewandten Oberseite der Dichtungsbahn 4 eine Befestigungsvorrichtung aufgesetzt, an der mittels geeigneter und hier nicht näher dargestellter Haltemittel wie z. B. Verschraubungen die oben genannten Aufbauteile festgelegt werden können.

Die Befestigungsvorrichtung besteht dabei aus einem Grundkörper 5, welcher flächenförmig ausgebildet ist und somit als Kunststoff- oder Holzplatte hergestellt sein kann. Der Grundkörper 5 ist auf der Flachdachkonstruktion 1 mittels einer Mehrzahl von Verankerungselementen 9 befestigt.

Ein Verankerungselement 9 ist exemplarisch in der Figur 1 dargestellt und besteht im Wesentlichen aus einem Schaftteil 11, das an seinem unteren freien Ende in einer Ausnehmung des Tragunterbaus 2 verschraubt ist. Die Festlegung erfolgt dabei mittels geeigneter Werkzeuge durch Verwendung sogenannter Bohrschrauben in der entsprechenden Tragunterbaukonstruktion, wie beispielsweise in ein Trapezblech wie in der Figur 1 dargestellt. Zu diesem Zweck weist das freie Ende des Schaftteils 11 eine entsprechende Schneidspitzenausformung auf.

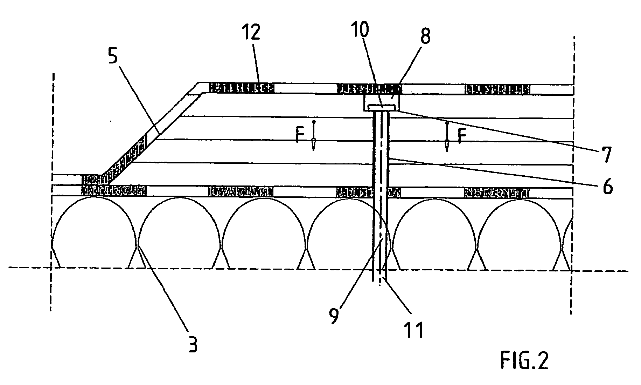

Am gegenüber liegenden Ende des Schaftteiles 11 befindet sich ein Anschlagkopf 10, welcher in einer Ausnehmung 8 des Grundkörpers 5 auf einem Absatz 7 der Ausnehmung 8 aufliegt. Wie aus der Figur 2 ersichtlich ist, ist somit in den Grundkörper 5 eine Mehrzahl von Bohrungen 6 eingebracht, in der jeweils ein Verankerungselement 9 zur Einleitung von auf den Grundkörper 5 wirkenden dachparallelen Schubkräften beispielsweise infolge von an den am Grundkörper 5 angeordneten Aufbauelementen angreifenden Windbelastungen eingespannt ist. An der Oberseite des Grundkörpers 5 ist jede Bohrung 6 jeweils in Form einer Sacklochbohrung verbreitert, so dass sich der erwähnte Absatz 7 ergibt. In jeder dieser Bohrungen 6 wird ein Verankerungselement 9 eingeführt und so in den Tragunterbau 2 eingeschraubt, dass der Anschlagkopf 10 auf dem Absatz 7 zur Anlage kommt.

Durch diese Maßnahme werden alle am Grundkörper 5 infolge von Umwelteinflüssen angreifende Zug-, Druck- und Schubkräfte zuverlässig in den Unterbau übertragen.

Sowohl der Figur 1 als auch der Figur 2 ist zu entnehmen, dass nach Befestigung des Grundkörpers 5 am Tragunterbau 2 dieser vollflächig mit einer Dichtungsbahn 12 überdeckt wird; diese Dichtungsbahn 12 wird im Seitenbereich des Grundkörpers 5, welcher in diesem Bereich vorzugsweise unter einem Winkel von 45 Grad abgeschrägt ist, mit der auf der Dämmschicht 3 befindlichen Dichtungsbahn 4 verschweißt. Durch diese Maßnahme ist eine vollständige Abdichtung der Flachdachkonstruktion 1 gewährleistet, so dass das Eindringen von Feuchtigkeit, welches zwangsläufig zu einer Schädigung der Dämmschicht 3 führen würde, ausgeschlossen ist.

In der vergrößerten Darstellung der Figur 2 ist anhand der dort eingezeichneten Pfeile F verdeutlicht, dass eine Druckbelastung des Grundkörpers 5 - infolge von Gewichtskräften oder infolge einer Begehung durch Wartungs- und Montagepersonal für die auf der Flachdachkonstruktion aufgesetzten Bauelemente - aufgrund der Elastizität der Dämmschicht 3 zu einem leichten Eindringen des Grundkörpers 5 in die Dämmschicht führt.

Aufgrund der speziellen Befestigungstechnik ist jedoch gewährleistet, dass infolge der Tiefe der Ausnehmung 8 und der korrespondierenden Höhe des Anschlagkopfes 10 des Verankerungselementes 9 genügend vertikaler Bewegungsspielraum für den Anschlagkopf innerhalb der Ausnehmung 8 vorhanden ist. Der Grundkörper 5 wird sich somit infolge von Druckkräften F in Längsrichtung des Verankerungselementes an diesem entlang verschieben, so dass die Einspannlänge des Verankerungselementes (9) im Grundkörper (5) erhalten bleibt. Eine Beschädigung der außen liegenden Dichtungsbahn 12 aufgrund der Druckbelastung ist aber aufgrund der Gestaltung der Ausnehmung 8 ausgeschlossen.

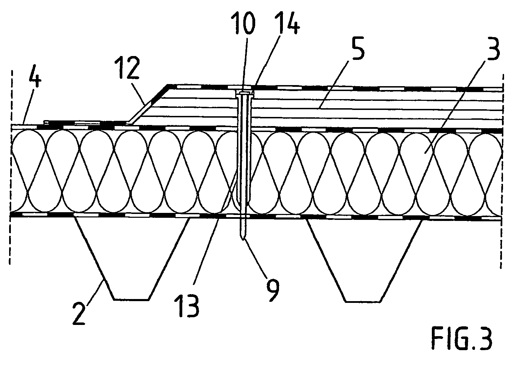

In der Figur 3 ist eine Ausgestaltung der erfindungsgemäßen Befestigungsvorrichtung dargestellt, bei der das Verankerungselement 9 im Bereich der Ausnehmung 8 im Grundkörper und im Bereich der Dämmschicht 3 von einem Hülsenelement 13 umgriffen ist. Das Hülsenelement 13 ist rohrförmig ausgebildet, wobei sein Innendurchmesser geringfügig größer bemessen ist als der Außendurchmesser des Verankerungselementes 9. An seinem oberen, dem Anschlagkopf zugewandten Ende ist das Hülsenelement 13 mit einem Kragen 14 versehen, durch den ein Hineinrutschen des Hülsenelementes 13 in die Ausnehmung 8 verhindert wird.

Durch die zusätzliche Versteifung des Schaftteiles 11 der Verankerungselemente 9 durch Hülsenelemente 13 können insbesondere bei hohen Schichtdicken der Dämmschicht 3 zusätzliche Schubkräfte aufgenommen werden.

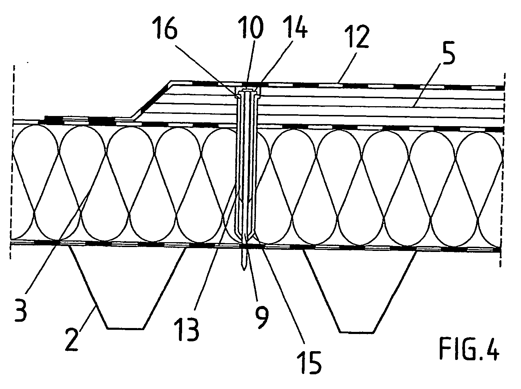

Eine weitere Steigerung der Schubkraftübertragung ist durch die in der Figur 4 dargestellte Ausführungsvariante möglich. Hier ist das Hülsenelement 13 von einem weiteren Hülsenelement 15 umgeben. Die Ausführung des Hülsenelementes 15 entspricht bis auf Durchmesser und Länge im Wesentlichen denjenigen des Hülsenelementes 13. Dies bedeutet, dass auch am Hülsenelement 15 im oberen Endbereich ein Kragen 16 angeformt ist. Am gegenüberliegenden Ende ist das Hülsenelement konisch zulaufend ausgebildet, durch diese Spitzenausformung wird das Einbringen des Hülsenelementes 15 in die Dämmschicht 3 erleichert.

Im Übrigen entspricht die konstruktive Gestaltung der Befestigungsvorrichtung entsprechend der Figuren 3 und 4 im Wesentlichen derjenigen der Figur 1, so dass an dieser Stelle auf eine detaillierte Erläuterung des Aufbaus der erfindungsgemäßen Ausgestaltungsvarianten nach Fig. 3 und 4 verzichtet werden kann.

### Bezugszeichenliste

- 1: Flachdachkonstruktion
- 2: Tragunterbau
- 3: Dämmschicht
- 4: Dichtungsbahn
- 5: Grundkörper
- 6: Bohrung
- 7: Absatz
- 8: Ausnehmung
- 9: Verankerungselement
- 10: Anschlagkopf
- 11: Schaftteil
- 12: Dichtungsbahn
- 13: Hülsenelement
- 14: Kragen
- 15: Hülsenelement
- 16: Kragen

## Patentansprüche

1. Befestigungsvorrichtung für die Verankerung von Aufbauelementen wie PV-Anlagen oder Absturzsicherungen auf einer Flachdachkonstruktion (1) sowie zur Übertragung von auf die Aufbauelemente wirkenden dachparallelen Kräften in die Flachdachkonstruktion (1), welche aus einem Tragunterbau (2) und einer an der Oberseite des Tragunterbaus (2) angeordneten, mit Dichtungsbahnen (4) überdeckten Dämmschicht (3) besteht, wobei die Befestigungsvorrichtung einen flächenförmigen Grundkörper (5) zur Auflage auf der Flachdachkonstruktion (1) an der dem Tragunterbau (2) abgewandten Oberseite der Dichtungsbahnen (4) aufweist, welcher mit mindestens einem Verankerungselement (9) am Tragunterbau (2) festgelegt ist, wobei das Verankerungselement (9) an seinem oberen, dem Tragunterbau (2) abgewandten Ende in dem Grundkörper (5) senkrecht verschieblich zur Flachdachoberfläche eingespannt ist und mit einem Anschlagkopf (10) versehen ist, welcher in einer Ausnehmung (8) an der Oberseite des Grundkörpers (5) so aufgenommen ist, dass bei Druckbelastung des Grundkörpers (5) dieser in Längsrichtung des Verankerungselementes (9) an diesem entlang verschiebbar ist, so dass die Einspannlänge des Verankerungselementes (9) im Grundkörper (5) erhalten bleibt und wobei der Anschlagkopf (10) innerhalb der Ausnehmung (8) verbleibt.
**dadurch gekennzeichnet, dass**
das Verankerungselement (9) mindestens im Bereich seines Durchdringens durch den Grundkörper (5) und die Dämmschicht (3) von einem Hülsenelement (13) umgriffen ist.

2. Befestigungsvorrichtung nach Anspruch 1,
**dadurch gekennzeichnet, dass**
das Verankerungselement (9) mit seinem unteren freien Ende in einer Ausnehmung am Tragunterbau (2) durch eine Verschraubung gehalten ist.

3. Befestigungsvorrichtung nach Anspruch 1 oder 2,
**dadurch gekennzeichnet, dass**
der Innendurchmesser des Hülsenelementes (13) geringfügig größer bemessen ist als der Außendurchmesser des Verankerungselementes (9).

4. Befestigungsvorrichtung nach Anspruch 1 oder 3,
**dadurch gekennzeichnet, dass**
das Hülsenelement (13) mindestens im Bereich seines Durchdringens durch den Grundkörper (5) und die Dämmschicht (3) von einem weiteren Hülsenelement (15) umgriffen ist.

5. Befestigungsvorrichtung nach einem der Ansprüche 1 bis 4,
**dadurch gekennzeichnet, dass**
das Hülsenelement (13, 15) an seinem unteren freien Ende konusförmig zu seiner Mittelachse eingezogen ist.

6. Befestigungsvorrichtung nach einem der Ansprüche 1 bis 5,
**dadurch gekennzeichnet dass**
der Grundkörper (5) an seiner der Flachdachkonstruktion (1) abgewandten Außenseite durch eine Dichtungsbahn (12) überdeckt ist, die an den Seitenbereichen des Grundkörpers (5) mit der die Dämmschicht (3) abdeckenden Dichtungsbahn (4) luft- und flüssigkeitsdicht verbunden ist.

## Claims

1. Mounting device for anchoring construction elements, such as PV systems or fall-prevention devices, on a flat roof structure (1) and also for transmitting forces parallel to the roof which are acting upon said construction elements into said roof structure (1), which consists of a supporting substructure (2) and an insulating layer (3) which is arranged on the upper side of said supporting substructure (2) and is covered with sealing webs (4), wherein the mounting device has a laminar base body (5) for resting on the roof structure (1) on that upper side of the sealing webs (4) which faces away from the supporting substructure (2), which base body is fixed to said supporting substructure (2) by means of at least one anchoring element (9), wherein said anchoring element (9) is clamped, at its upper end that faces away from the supporting substructure (2), within the base body (5) in a manner vertically displaceable in relation to the flat roof surface and is provided with a stop head (10) which is received in a clearance (8) on the upper side of the base body (5) in such a way that, when the base body (5) is subjected to pressure loading, said base body is displaceable along the anchoring element (9) in the longitudinal direction of the latter, so that the length over which said anchoring element (9) is clamped within the base body (5) is maintained, and wherein the stop head (10) remains inside the clearance (8),
**characterised in that**
the anchoring element (9) has a sleeve element (13) engaging around it, at least in the region in which it penetrates through the base body (5) and the insulating layer (3).

2. Mounting device according to Claim 1,
**characterised in that**
the anchoring element (9) is held, by its lower free end, in a clearance on the supporting substructure (2) by means of a screw connection.

3. Mounting device according to Claim 1 or 2,
**characterised in that**
the internal diameter of the sleeve element (13) is of slightly larger dimensions than the external diameter of the anchoring element (9).

4. Mounting device according to Claim 1 or 3,
**characterised in that**
the sleeve element (13) has a further sleeve element (15) engaging around it, at least in the region in which it penetrates through the base body (5) and the insulating layer (3).

5. Mounting device according to one of Claims 1 to 4,
**characterised in that**
the sleeve element (13, 15) is drawn in towards its central axis in a cone-shaped manner at its lower free end.

6. Mounting device according to one of Claims 1 to 5, **characterised in that**
the base body (5) is covered, on its outer side that faces away from the flat roof structure (1), by a sealing web (12) which is connected in an air-tight and liquid-tight manner, at the lateral regions of said base body (5), to the sealing web (4) covering the insulating layer (3).

## Revendications

1. Dispositif de fixation pour l'ancrage d'éléments de construction tels qu'installations photovoltaïques ou protections anti-chute sur une structure de toit plat (1), ainsi que pour le transfert de forces parallèles au toit agissant sur les éléments de construction vers la structure de toit plat (1), laquelle est composée d'une structure porteuse (2) et d'une couche isolante (3) posée sur la face supérieure de la structure porteuse (2) et recouverte de bandes d'étanchéité (4), ledit dispositif de fixation comportant un corps de base (5) plat destiné à être posé sur la structure de toit plat (1), sur la face supérieure des bandes d'étanchéité (4) distante de la structure porteuse (2), et qui est fixé sur la structure porteuse (2) par au moins un élément d'ancrage (9), ledit élément d'ancrage (9) étant à son extrémité supérieure distante de la structure porteuse (2), encastré dans le corps de base (5) de manière coulissante verticalement vers la surface du toit plat et étant pourvu d'une tête de butée (10) logée dans un évidement (8) sur la face supérieure du corps de base (5), de telle manière qu'en cas de contrainte de pression du corps de base (5), celui-ci peut coulisser le long de l'élément d'ancrage (9) dans le sens de la longueur de ce dernier, si bien que la longueur d'encastrement de l'élément d'ancrage (9) reste inchangée dans le corps de base (5), la tête de butée (10) restant à l'intérieur de l'évidement (8),
**caractérisé en ce qu'**
au moins dans sa zone de traversée du corps de base (5) et de la couche isolante (3), l'élément d'ancrage (9) est entouré par un élément de douille (13).

2. Dispositif de fixation selon la revendication 1,
**caractérisé en ce que**
l'élément d'ancrage (9) est maintenu par vissage à son extrémité inférieure libre dans un évidement sur la structure porteuse (2).

3. Dispositif de fixation selon la revendication 1 ou 2,
**caractérisé en ce que**
le diamètre intérieur de l'élément de douille (13) est légèrement supérieur au diamètre extérieur de l'élément d'ancrage (9).

4. Dispositif de fixation selon la revendication 1 ou 3,
**caractérisé en ce qu'**
au moins dans sa zone de traversée du corps de base (5) et de la couche isolante (3), l'élément de douille (13) est entouré par un autre élément de douille (15).

5. Dispositif de fixation selon l'une des revendications 1 à 4,
**caractérisé en ce qu'**
à son extrémité inférieure libre, l'élément de douille (13, 15) se rétrécit en forme de cône vers son axe central.

6. Dispositif de fixation selon l'une des revendications 1 à 5,
**caractérisé en ce que**
sur sa face extérieure distante de la structure de toit plat (1), le corps de base (5) est recouvert par une bande d'étanchéité (12) raccordée à la bande d'étanchéité (4) couvrant la couche isolante (3), de manière étanche à l'air et aux liquides dans les parties latérales du corps de base (5).
